# EUROPEAN PATENT APPLICATION

(11) **EP 4 142 296 A1**
(43) Date of publication of application: **01.03.2023**
(21) Application number: 22165497.3
(22) Date of filing: 30.03.2022
(51) Int. Cl.: H04N 21/45, H04N 21/2187, H04N 21/478, H04N 21/4788, H04N 21/4722

(54) **METHOD AND APPARATUS FOR DISPLAYING ITEM INFORMATION**

(30) Priority: 30.08.2021 CN 202111003441
(71) Applicant: Beijing Dajia Internet Information Technology Co., Ltd., Beijing 100085 (CN)
(72) Inventor: Liu, Peng, Beijing, 100085 (CN); Liu, Zhiguo, Beijing, 100085 (CN); Yang, Haolei, Beijing, 100085 (CN); Zuo, Yayun, Beijing, 100085 (CN); Ning, Zhenhang, Beijing, 100085 (CN); Gao, Wei, Beijing, 100085 (CN); Yang, Kai, Beijing, 100085 (CN); Wang, Zhuai, Beijing, 100085 (CN); Yao, Jifeng, Beijing, 100085 (CN); Lu, Guangyuan, Beijing, 100085 (CN); Ma, Zhen, Beijing, 100085 (CN); Ni, Wei, Beijing, 100085 (CN)
(74) Representative: Angerhausen, Christoph

(57) **Abstract**

The invention relates to a method and an apparatus for displaying item information, a device, and a storage medium. The method includes: displaying, category information corresponding to a combined item object and an interaction operation control on an item display interface of a live broadcast room, in which the interaction operation control is configured to view basic information of sub-item objects and the combined item object includes at least two sub-item objects of the same category; in response to a trigger operation of the interaction operation control, determining a target sub-item object matching specified geographic information of an audience terminal from the at least two sub-item objects; and displaying basic information corresponding to the target sub-item object on the item display interface. The invention may improve audience enthusiasm of participating in the e-commerce live broadcasting and improve a traffic utilization rate of the live broadcasting room.

## Description

### TECHNICAL FIELD

The disclosure relates to the field of computer technologies, and more particularly to a method and an apparatus for displaying item information, an electronic device and a storage medium.

### BACKGROUND

With the development of Internet technology, there are more and more Internet products. These Internet items provide users with rich usage experience, such as experience of online item transaction, experience of watching short videos, experience of participating in live broadcast as an anchor or an audience, and so on. In recent years, e-commerce live broadcasting is popular. During the process of e-commerce live broadcasting, the anchor can carry out live broadcasting and sell items for cooperative businesses, and display information of relevant items (such as item links) in the live broadcasting room. Based on the information of relevant item displayed above, the audience can know about and purchase relevant items, such as clicking the items links to purchase the items.

### SUMMARY

The disclosure provides a method and an apparatus for displaying item information, an electronic device and a storage medium. The technical solution of the present disclosure is described as follows.

According to a first aspect of the disclosure, there is provided a method for displaying item information. The method includes: displaying by an audience terminal, category information corresponding to a combined item object and an interaction operation control on an item display interface of a live broadcast room, in which the interaction operation control is configured to view basic information of sub-item objects and the combined item object comprises at least two sub-item objects of the same category; in response to a trigger operation of the interaction operation control, determining by the audience terminal, a target sub-item object matching specified geographic information of the audience terminal from the at least two sub-item objects; and displaying by the audience terminal, basic information corresponding to the target sub-item object on the item display interface.

According to a second aspect of the disclosure, there is provided an apparatus for displaying item information. The apparatus includes: an item category information display unit, configured to perform displaying category information corresponding to a combined item object and an interaction operation control on an item display interface of a live broadcast room, in which the interaction operation control is configured to view basic information of sub-item objects and the combined item object includes at least two sub-item objects of the same category; a target sub-item object determination unit, configured to perform determining a target sub-item object matching specified geographic information of an audience terminal from the at least two sub-item objects in response to a trigger operation of the interaction operation control; and an item basic information display unit, configured to perform displaying basic information corresponding to the target sub-item object on the item display interface.

Further aspects of the disclosure are defined by the dependent claims.

With the above technical solution, the sub-item objects matching the specified geographic information of the audience terminal may be displayed for the audience when a category of items is explained in the live broadcast room, avoiding that the displayed item objects are not applicable or not interested and realizing accurate display of the items to be sold. The sub-item objects with different applicable region conditions can be displayed in the live broadcasting room at the same time, so as to improve audience's enthusiasm of participating in the e-commerce live broadcasting and improve a traffic utilization rate of the live broadcasting room.

It should be understood that the above general description and the following detailed description are only explanatory, without any limitations to the disclosure.

### BRIEF DESCRIPTION OF THE DRAWINGS

The drawings herein are incorporated into the specification and constitute a part of the specification, show embodiments in accordance with the disclosure, and are used to explain the principle of the disclosure together with the specification, which do not constitute an improper limitation to the disclosure.
FIG. 1 is an architecture diagram of a system applying a method for displaying item information according to an embodiment.
FIG. 2 is a flowchart of a method for displaying item information according to an embodiment.
FIG. 3 is a flowchart of determining a target sub-item object according to an embodiment.
FIG. 4 is a flowchart of determining a target sub-item object according to an embodiment.
FIG. 5 is a flowchart of displaying item basic information corresponding to a target sub-item object on an item display interface according to an embodiment.
FIG. 6 is an architecture diagram of constructing a combined item object according to an embodiment.
FIG. 7 is an interface diagram of displaying a combined item subject according to an embodiment.
FIG. 8 is an interface diagram of displaying sub- items according to an embodiment.
FIG. 9 is a block diagram of an apparatus for displaying item information according to an embodiment.
FIG. 10 is a block diagram of an electronic device according to an embodiment.

### DETAILED DESCRIPTION

The user information and relevant information of user accounts (including social relationship identity information and the like) described in the embodiments of the present disclosure are obtained under user permission. On the premise of obtaining user permission and authorization, the method, apparatus, device and storage medium involved in the present disclosure can obtain the relevant information of users.

In order to make those skilled in the art better understand the technical solutions of the disclosure, the technical solutions in the embodiments of the disclosure will be clearly and thoroughly described below with reference to the accompanying drawings.

It should be noted that the terms such as "first" and "second" in the specification, claims and the above-mentioned drawings of the disclosure are used to distinguish similar objects, and not used to describe a specific sequence or precedence order. It should be understood that the data used in this way may be interchanged under appropriate circumstances so that the embodiments of the disclosure described herein may be implemented in an order other than those illustrated or described herein. The implementations described in the embodiments below do not represent all implementations consistent with the disclosure. Rather, they are merely examples of apparatuses and methods consistent with some aspects of the disclosure as detailed in the appended claims.

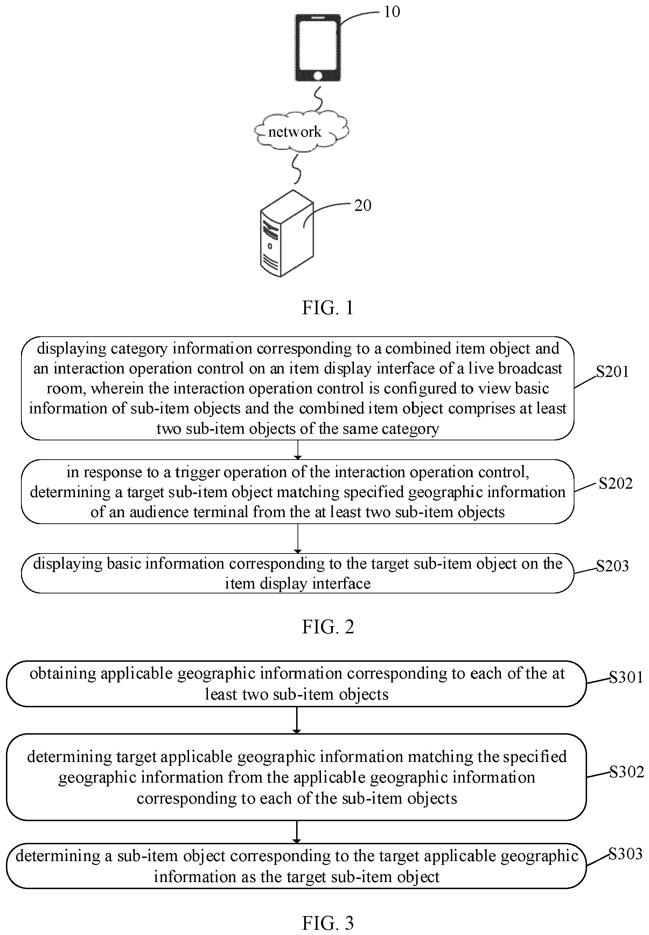

FIG. 1 is an architecture diagram of a system for applying a method for displaying item information according to an embodiment. Referring to FIG. 1, the architecture diagram may include a client 10 and a server 20.

The client 10 may be but is not limited to a physical device such as a smart phone, a tablet computer, a laptop computer, a desktop computer, a smart speaker, a smart wearable device, a digital assistant, an augmented reality device, a virtual reality device, or one or more of the applications run in the physical device.

The server 20 may provide the client 10 with data to be loaded of item basic information corresponding to sub-item objects in response to a current trigger operation of a user, so that the client 10 displays the item basic information corresponding to the sub-item objects based on the data to be loaded.

As an example, the server 20 may be but not limited to an independent server, a server cluster or a distributed system composed of multiple physical servers, or one or more of cloud servers or the like which provide basic cloud computing services such as a cloud service, a cloud database, cloud computing, a cloud function, cloud storage, network services, cloud communications, middleware services, domain name services, security services, big data and artificial intelligence platforms and the like. The client 10 and the server 20 may be directly or indirectly connected through wired or wireless communication, which is not limited in the embodiment of the present disclosure.

The method for displaying item information according to the embodiment of the present disclosure may be executed by an apparatus for displaying item information. The apparatus may be integrated in an electronic device such as a terminal in the form of hardware or software, or may be implemented by the terminal alone, or may be implemented by the terminal and the server cooperatively.

FIG. 2 is a flowchart of a method for displaying item information according to an embodiment. As shown in FIG. 2, the method for displaying item information can be applied to an electronic device. Taking the electronic device being the client in the schematic diagram of the above implementation environment as an example, the method includes the following steps at S201-S203.

At S201, item category information corresponding to a combined item object and an interaction operation control for viewing basic information of sub-items are displayed on an item display interface of a live broadcast room. The combined item object includes at least two sub-item objects of the same category.

In the embodiment of this specification, the anchor user uses an anchor terminal to record a live broadcast and interact with an audience user. The audience user uses the audience terminal to watch the live broadcast and interact with the anchor user. The server is used to transmit in real time the live video recorded by the anchor user to the audience user, and transmit interaction data between the audience user and the anchor user. In the process of e-commerce live broadcast, the anchor user sells cooperative items in the live broadcast. The audience terminal can display item category information corresponding to a combined item object and an interaction operation control for viewing basic information of sub-items on an item display interface of a live broadcast room, for the audiences to watch.

The live broadcast interface is often set with an anchor video area and an interaction area. The item display interface may be an item display area set in the live broadcast interface. The item display interface can also be an interface independent of the live broadcast interface, and the interface style adopted by the item display interface can be a notification bar, a pop-up window, a floating window, and the like.

The combined item object includes at least two sub-item objects of the same category. For example, the item category A is a hotpot coupon and the sub-item objects included in the combined item object A have a sub-item object 1 indicating a brand A hotpot coupon, a sub-item object 2 indicating a brand B hotpot coupon and a sub-item object 3 indicating a brand C hotpot coupon. When the anchor user explains the item category A, the audience terminal displays the item category information corresponding to the combined item object A and the interaction operation control for viewing the basic information of the sub-items on the item display interface of the live broadcast room.

The item category information corresponding to the combined item object may be information describing the combined item object, which may include but not limited to at least one of an item category name, an image and a video indicating the item category, price range information, an activity title, an activity introduction, etc.. The interaction operation control for viewing the basic information of the sub-items is configured to receive a trigger operation of the audience user and allow the user to view the sub-item object (belonging to the combined item object). In an example, the item category information corresponding to the combined item object may be displayed in a first preset area of the item display interface. The item category information includes at least one of an item category name, an image and a video indicating the item category. The interaction operation control for viewing basic information of sub-items is displayed in a second preset area of the item display interface. the item category information corresponding to the combined item object and the interaction operation control for viewing the basic information of the sub-items are respectively displayed in different areas of the item display interface, which provides a simple and intuitive display interface of the combined item object. When there is more than one piece of item category information corresponding to the combined item object, the pieces of information can be displayed in one place in the first preset area, which is different from the second preset area where the interaction operation control is displayed, which can improve convenience of the audience users to find a target on the item display interface, thus improving the operation efficiency of viewing the items during the e-commerce live broadcast.

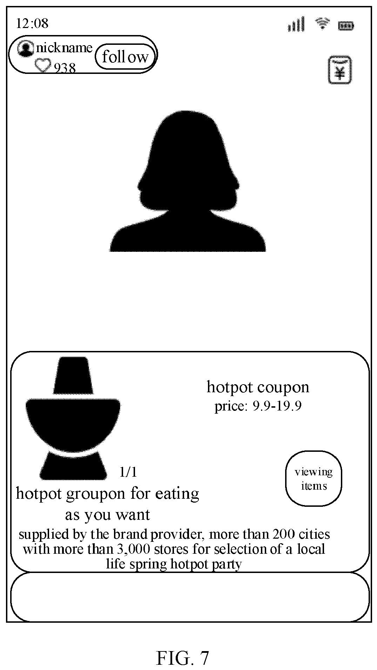

As shown in FIG. 7, in combination with the above example, the item category name here may be a "hotpot coupon"; the "image indicating the item category" may be a material image related to the "hotpot coupon" (the number of material images may be more than one and there is no limitation on whether each material image belongs to a static image or a dynamic image); the "video indicating the item category" may be a material video related to the "hotpot coupon"; the "price range information" may indicate the lowest price and the highest price involved in the hotpot coupons for the brands A to C; the "activity title" may be a platform activity that the combined item object A participates in, such as a "hotpot groupon for eating as you want"; the "activity introduction" is an introduction of the above platform activity, such as "supplied by the brand provider, more than 200 cities with more than 3,000 stores for selection of a local life spring hotpot party".

In an embodiment, before displaying item category information corresponding to the combined item object and the interaction operation control for viewing basic information of sub-items on the item display interface of the live broadcast room, the method further includes: detecting content information of an anchor explaining the items; and determining the combined item object based on the content information. During the process of e-commerce live broadcast, the anchor user may explain items to be sold one by one, the audience terminal may detect the content information of the anchor explaining the items according to a live video transmitted by the server in real time and determine the combined item object according to the content information, so as to request the server for data to be loaded of the item category information corresponding to the combined item object or query the data to be loaded from data pre-stored locally. In this way, the timeliness and accuracy of locating the combined item object in conjunction with the explanation of the anchor user can be improved. Taking situations into account, such as a network state, a device state, etc., a situation where moments of receiving live videos that the anchor user is instructed to explain a certain items to be sold may be different for different audience terminals, actively detecting the explained content information and determining the combined item object by the audience terminal may ensure live viewing enthusiasm of the specific audience terminal.

In practical applications, the combined item object may be constructed by the anchor user through a user interface of the anchor terminal or may also be constructed by a staff of the platform that provides e-commerce live broadcast services on the user interface provided by the platform. During the process of commercial live broadcast, the anchor uses the combined item object that has been constructed. Since the sub-item objects in the combined item object are from cooperative merchants, items from different cooperative merchants need to be combined in constructing a combined item object, the items identifiers need to be set, and information such as product content, an stock keeping unit (SKU), a price, an applicable city, an applicable store, a purchase policy, a validity period need to be obtained. Generally, the refund policy for the combined item object may need to be consistent with each other.

Since the sub-item objects in the combined item object are from cooperative merchants, different cooperative merchants may provide different applicable region conditions of sub-items and the applicable region conditions of sub-items from different cooperative merchants may exist some intersection regions. For example, the applicable regions of applicable region condition 1 are regions 1 to 3, and the applicable regions of applicable region condition 2 are regions 3 to 4, then the region 3 is the intersection region corresponding to the two applicable region conditions. In an example, the cooperative merchants may be merchants with chain stores in different regions, and an entrance to "publish a combined item object" may be provided with the cooperative merchants. The combined item object may be constructed by the cooperative merchants, and the anchor user may use the combined item object that has been constructed in the process of e-commerce live broadcast. The information about the related items that the cooperative merchant needs to upload may include an item name, an item header image, and an associated video, etc..

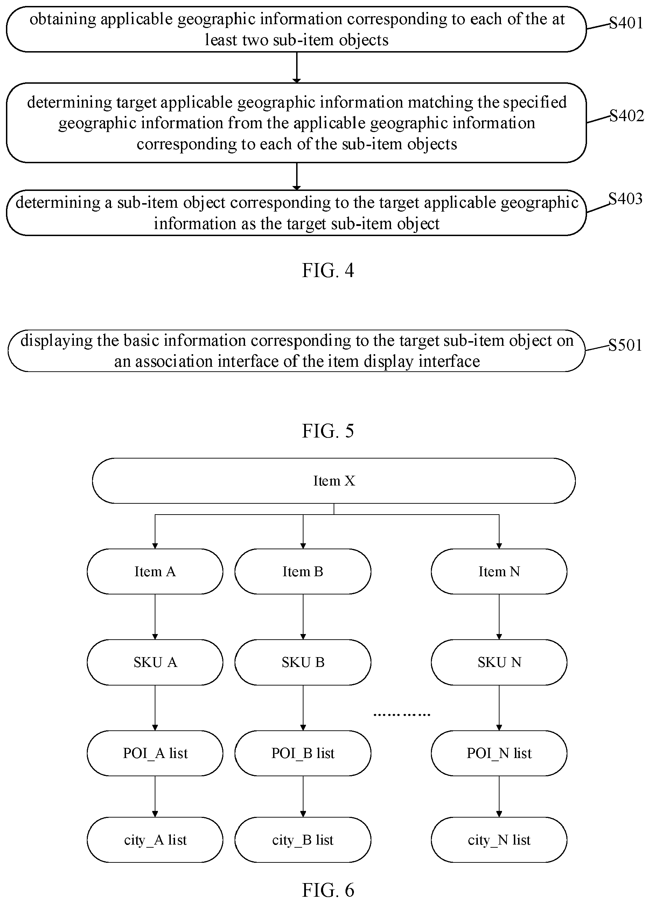

Compared with a single item object, the combined item object realizes aggregation of multiple item objects indicating the same item category. The combined item object can make up for applicable region limitations of the single item object and the items that are more applicable or interested may displayed to audience users in different regions, for example, hotpot coupons that are more in line with tastes are displayed to audience users in different regions. Referring to FIG. 6, a sum of item information of the combined original items (e.g., Item A to Item N) can be regarded as item information of item X when constructing a combined item object, for example, a SKU of item X is equal to the sum of SKU information of original items A to N (e.g., a sum of SKU A to SKU N). The applicable region (city) information of the items can be extracted from store (POI) information of the combined original items. As illustrated in FIG. 6, POI_A_list, POI_B_list, ..., POI_N_list represent store information of original items A to N and city A list, city_B_list, ..., city N list represent applicable city information of original items A to N.

At S202, in response to a triggering operation of the interaction operation control, a target sub-item object matching specified geographic information of an audience terminal is determined from the at least two sub-item objects.

In the embodiment of this specification, the trigger operation of the interaction operation control indicates that the basic information of the sub-items needs to be viewed. The trigger operation of the interaction operation control may include but are not limited to, a clicking operation, a sliding operation, a gesture operation, an expression trigger operation, a voice trigger operation, and the like. The combined item object includes at least two sub-item objects of the same category. The sub-item object that matches the specified geographic information of the audience terminal may be one sub-item object, two sub-item objects, or multiple sub-item objects determined from the sub-item objects indicating the same item category in the combined item object. When the sub-item object matching the specified geographic information of the audience terminal is determined from the combined item object, it can be determined according to applicable geographic information carried by the sub-item object in the combined item object. The applicable geographic information may come from applicable region conditions of the cooperative items indicated by the sub-item object (for example, the applicable region for the applicable region conditions of the cooperative item 1 is region A), or may also come from a recommended usage region of the cooperative item indicated by the sub-item object (for example, the recommended usage region of the cooperative item 2 is region B; when the cooperative item 2 is a ski cap, the region that is inconvenient to carry out skiing is a region that is not recommended for the cooperative item 2).

The following may introduce how to determine the target sub-item object in combination with two types of the specified geographic information of the audience terminal.
1) The specified geographic information is current geographic information of the audience terminal, in response to the trigger operation of the interaction operation control, determining the target sub-item object matching the specified geographic information of the audience terminal from the at least two sub-item objects includes the following steps at S301-S303 as shown in FIG. 3.

At S301, applicable geographic information corresponding to each of the at least two sub-item objects is obtained.

At S302, target applicable geographic information matching the specified geographic information is determined from the applicable geographic information corresponding to each of the sub-item objects.

At S303, a sub-item object corresponding to the target applicable geographic information is determined as the target sub-item object.

The current geographic information can be obtained by the audience terminal with the help of a location based service (LBS), and the current geographic information may be positioning information obtained based on the global positioning system (GPS), positioning information obtained based on the wireless communication technology (Wi-Fi), and positioning information obtained based on the Internet protocol address (IP address). The current geographic information may be in the form of geographic coordinates, region labels (such as labels for city A, labels for northern regions), and the like. Alternatively, the current geographic information may also come from the region and city that the audience user fills in the user profile.

The Applicable geographic information may be used as a necessary parameter for the sub-item object when constructing a combined item object. The applicable geographic information of the sub-item object may come from the applicable region conditions of the sub-items provided by the cooperative merchants. The applicable geographic information may be in the form of region labels.

For example, the applicable geographic information of the sub-item object 4 in the combined item object B is city A, the applicable geographic information of the sub-item object 5 is city B, and the applicable geographic information of the sub-item object 6 is city C. The current geographic information as the specified geographic information of the audience terminal is {aaa~bbb in east longitude, ccc~ddd in north latitude}. When the specified geographic information of the audience terminal falls within a geographic coordinate range of city A, then city A is the target applicable geographic information, the sub-item object 4 is the target sub-item object. Correspondingly, the audience terminal displays the item basic information of the sub-item object 4 as the target sub-item object.

The sub-item object that matches the current geographic information can be enjoyed by the audience user after purchase, and are more suitable for personal living habits of the audience user. Displaying the item basic information of the sub-item object matching the current geographic information to the audience user can improve the accuracy of displaying the items for sale to the audience user. Especially for local daily items (such as consumption coupons for restaurant merchants, consumption coupons for entertainment merchants, etc.), such items often need to be consumed in stores after purchase. In other words, such items have geographical restrictions on their usage, e.g., there is no merchant store that serves the type of items in certain regions, or the same merchant has configured different restrictions for this type of items in different regions. The audience users in the live broadcast room can be from different regions, and displaying the basic item information of the sub-item objects that match the current geographic information to the audience users may avoid displaying items with geographic usage restrictions to the audience users, may provide the audience users with a personalized, high-quality shopping environment in the live broadcast room with low interference information content, thus realizing the function of accurately selling cross-region consumption coupons in a cross-region live broadcast.

Further, the audience terminal can skip the display of the combined item object, so that the sub-item objects that match the current geographic information are directly displayed. The audience terminal can detect the content information of the anchor explaining for the items according to the live video transmitted by the server in real time, and then determine the combined item object according to the explained content information, so as to request the server for data to be loaded for the item basic information of the sub-item objects that match the current geographic information (in the combined item object) or to query the data to be loaded from data pre-stored locally.

2) The specified geographic information is geographic information indicated by the trigger operation, in response to the trigger operation of the interaction operation control, determining the target sub-item object matching the specified geographic information of the audience terminal from the at least two sub-item objects includes the following steps at S401-S403.

At S401, applicable geographic information corresponding to each of the at least two sub-item objects is obtained.

At S402, target applicable geographic information matching the specified geographic information is determined from the applicable geographic information corresponding to each of the sub-item objects.

At S403, a sub-item object corresponding to the target applicable geographic information is determined as the target sub-item object.

The geographic information indicated by the trigger operation indicates that geographic information dimension of the items to be viewed is limited when the audience user chooses to view the items. In an embodiment, the geographic information indicated by the trigger operation may be determined by detecting geographic information where the trigger operation is located. The geographic information indicated by the trigger operation may be in the form of geographic coordinates, region labels (such as labels for city A, labels for northern regions), and the like. For the steps at S402-S403 here, reference may be made to the above steps at S302-S303, which may not be elaborated here.

The sub-item objects that match the geographic information indicated by the trigger operation satisfies real-time demand of the audience users when selecting the items to check based on the trigger operation, and improves convenience of the audience users to check the items in the geographic information dimension. Especially for local daily items (such as consumption coupons for restaurant merchants, consumption coupons for entertainment merchants, etc.), such items often need to be consumed in stores after purchase. In other words, such items have geographical restrictions on their usage. The audience users in the live broadcast room can be from different regions, such as, business travelers, people planning to travel, etc.. This can improve the convenience and efficiency of viewing and purchasing local lifestyle items in the destination.

At S203, basic item information corresponding to the target sub-item object is displayed on the item display interface.

In the embodiment of this specification, the item display interface on the audience terminal displays the basic item information corresponding to the target sub-item object. The item basic information of the sub-item object may include a first type of item basic information and a second type of item basic information. The first type of item basic information may include but is not limited to at least one of an item brand, an item name, an item image, an item video and the like. The second type of item basic information may include but is not limited to at least one of an item price, an item stock keeping unit (SKU), applicable city information, applicable store information, in-store consumption guidance information, and the like.

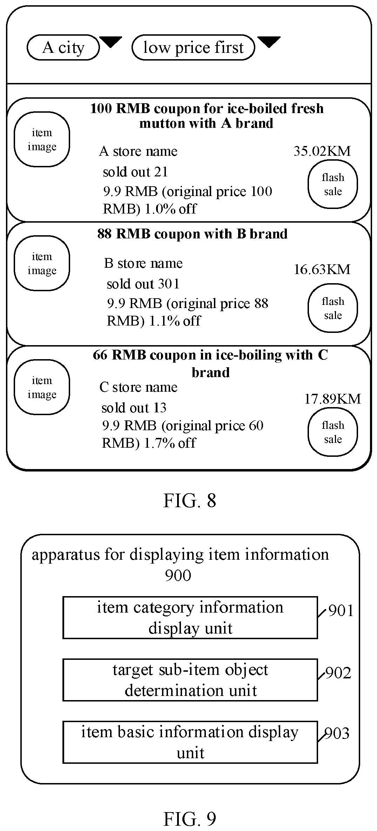

As shown in FIG. 8, in conjunction with the above example indicating the sub-item object 1 of the A brand hotpot coupon, the "item brand" can be "A brand"; the "item name" can be "100 RMB coupon for ice-boiled fresh mutton with A brand"; the "item image" can be a material image related to the "A brand hotpot coupon"(the number of material images can be more than one and there is no restriction on whether each material image belongs to a static image or a dynamic image); the "item video" can be a material video related to the "A brand hotpot coupon"; the "item price" can be a current price of "9.9 RMB" an original price of "100 RMB" for the A brand hotpot coupon; the "in-store consumption guidance information" can be a "name of the A store with a distance 35.02 km between the specified geographic information of the audience terminal and the A store". The item basic information of the sub-item object may also include "item sales information" (see "sold out 21" in FIG. 8) and "item discount information" (see "1.0% off' in FIG. 8). In addition, the item basic information of the sub-item object can also be displayed together with an interaction operation control indicating the purchase of items (see "flash sale" in FIG. 8).

In an implementation, as shown in FIG. 5, displaying the item basic information corresponding to the target sub-item object on the item display interface includes the following steps at S501.

At S501, the item basic information corresponding to the target sub-item object is displayed on an association interface of the item display interface.

The association interface of the item display interface can be a secondary page of the item display interface. At this time, the efficiency of switching from the item display interface as a primary page to the secondary page is relatively high. The association interface may also be a page whose dependence on the running environment is lower than dependence of the item display interface on the running environment, which can reduce the overhead of running resources and ensure the reliability and stability of the system performance.

In an example, the first type of item basic information corresponding to the target sub-item object may be displayed in the first preset area of the association interface. The first type of item basic information includes at least one of an item brand, an item name, an item image and an item video. The second type of item basic information corresponding to the target sub-item object may be displayed in the second preset area of the association interface. The second type of item basic information includes at least one of an item price, an item SKU, applicable city information, applicable store information and in-store consumption guidance information.

Here, the above-mentioned description may be referred, the "item SKU" can be a number of remaining saleable coupons for the A brand hotpot coupons, e.g., 100; the "applicable city information" can be "A city"; the "applicable store information" can be the "A store". When there are multiple pieces of item basic information of the sub-item object, the item basic information are divided to the first type of item basic information and the second type of item basic information. The first type of item basic information may be displayed in one place of the first preset area, which can be distinguished from the second preset area where the second type of item basic information is displayed. In this way, it can improve convenience for the audience users to find a target in the association interface and thus improve the operation efficiency of learning about and buying items during the e-commerce live broadcast process.

For "displaying the item basic information of the target sub-item object", display sequence information indicated by the trigger operation may be determined first; the item basic information corresponding to the target sub-item object is then displayed on the association interface based on the display sequence information. The audience users may select a limitation to the display sequence information of the sub- items to be viewed. For example, after selection of the audience user, the sub- items are displayed in a sequence of "low price first" or in a sequence of "sales volume first". When the number of target sub-item objects is one, the item basic information of the target sub-item object can be directly displayed. When the number of target sub-item objects is greater than or equal to 2, a display reference item may be first determined based on the display sequence information, for example, the display reference item "item price" for display sequence information corresponding to "low price first". The items price of each target sub-item object is determined based on the item basic information of each target sub-item object, and the item basic information of the target sub-item objects are then ranked in an ascending order of item prices for display.

The target sub-item object is displayed according to the display sequence information indicated by the trigger operation, which satisfies real-time demand of the audience user when selecting the items to view based on the trigger operation. The top item displayed according to the display sequence information may fall into an interested range of audience users, which can improve the efficiency of audience users in finding suitable items and improve the shopping enthusiasm of audience users in the live broadcast room.

With the method for displaying item information according to the above-mentioned embodiment, sub-item objects that match the specified geographic information of the audience terminal may be displayed to the audience when a certain item category is explained in the live broadcast room, so as to avoid that the item objects displayed to audiences are not applicable or audiences are not interested in these item objects, thus realizing accurate display of the items to be sold. In this way, the sub-item objects with different applicable region conditions can be constructed as combined item objects according to the indicated item categories, so that the sub-item objects with different applicable region conditions can be displayed in the live broadcast room at the same time, thus improving the enthusiasm of audiences viewing the e-commerce live broadcast and shopping in the live broadcast room, and improving a traffic utilization rate of the live broadcast room.

FIG. 9 is a block diagram of an apparatus 900 for displaying item information according to an embodiment. Referring to FIG. 9, the apparatus includes an item category information display unit 901, a target sub-item object determination unit 902 and an item basic information display unit 903.

The item category information display unit 901 is configured to perform displaying item category information corresponding to a combined item object and an interaction operation control for viewing basic information of sub-items on an item display interface of a live broadcast room, in which the combined item object includes at least two sub-item objects of the same category.

The target sub-item object determining unit 902 is configured to perform determining a target sub-item object matching specified geographic information of an audience terminal from the at least two sub-item objects in response to a trigger operation of the interaction operation control.

The item basic information display unit 903 is configured to perform displaying item basic information corresponding to the target sub-item object on the item display interface.

In an embodiment, the target sub-item object determination unit includes: a first specified geographic information determination unit, configured to perform determining current geographic information as the specified geographic information of the audience terminal; a first applicable geographic information obtaining unit, configured to perform obtaining applicable geographic information corresponding to each of the at least two sub-item objects; and a first target sub-item object determination sub-unit, configured to perform determining target applicable geographic information matching the specified geographic information from the applicable geographic information corresponding to each of the sub-item objects, and determining a sub-item object corresponding to the target applicable geographic information as the target sub-item object.

In an embodiment, the target sub-item object determination unit includes: a second specified geographic information determination unit, configured to perform obtaining the specified geographic information of the audience terminal based on geographic information indicated by the trigger operation; a second applicable geographic information obtaining unit, configured to perform obtaining applicable geographic information corresponding to each of the at least two sub-item objects; and a second target sub-item object determination sub-unit, configured to perform determining target applicable geographic information matching the specified geographic information from the applicable geographic information corresponding to each of the sub-item objects, and determining a sub-item object corresponding to the target applicable geographic information as the target sub-item object.

In an embodiment, the apparatus further includes: a calling unit, configured to perform calling an association interface with the item display interface; and a display unit, configured to perform displaying the item basic information corresponding to the target sub-item object on the association interface.

In an embodiment, when there are at least two target sub-item objects, the display unit includes: a sequence determination unit, configured to perform determining display sequence information indicated by the trigger operation; and a sequence display unit, configured to perform displaying the item basic information corresponding to the target sub-item object on the association interface based on the display sequence information.

In an embodiment, the display unit includes: a first association interface display unit, configured to perform displaying a first type of item basic information corresponding to the target sub-item object in a first preset area of the association interface, in which the first type of item basic information includes at least one of an item brand, an item name, an item image and an item video; and a second association interface display unit, configured to perform displaying a second type of item basic information corresponding to the target sub-item object in a second preset area of the association interface, in which the second type of item basic information includes at least one of an item price, an item stock keeping unit (SKU), applicable city information, applicable store information and in-store consumption guidance information.

In an embodiment, the item category information display unit includes: a first item display interface display unit, configured to perform displaying the item category information corresponding to the combined item object in a first preset area of the item display interface, in which the item category information includes at least one of an item category name, an image and a video indicating the item category; and a second item display interface display unit, configured to perform displaying the interaction operation control for viewing basic information of sub-items in a second preset area of the item display interface.

In an embodiment, the apparatus further includes: a detection unit, configured to perform detecting content information of an anchor explaining the items; and a combined item object determination unit, configured to perform determining the combined item object based on the content information.

Regarding the apparatus in the above-mentioned embodiment, the specific manner in which each module performs operations has been described in detail in the method embodiments, which will not be described in detail here.

In an embodiment, an electronic device is also provided, including a processor and a memory for storing instructions executable by the processor. When the processor is configured to execute the instructions, any step in the method for displaying item information according to the first aspect is implemented in the above embodiments.

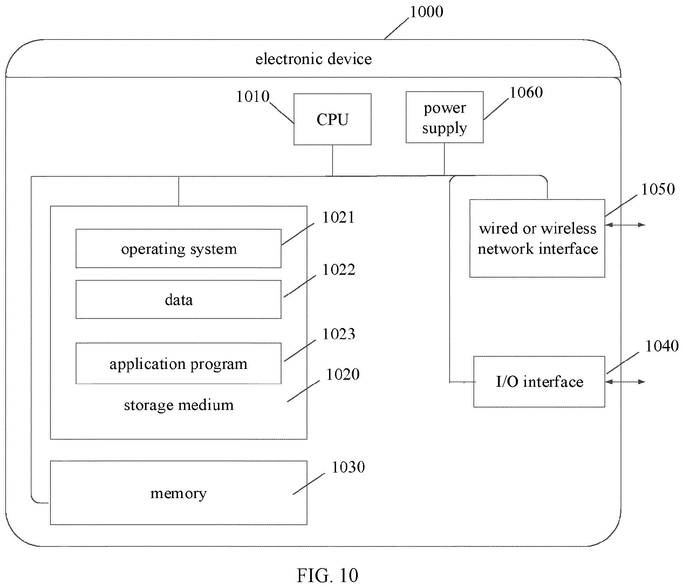

The electronic device may be a terminal, a server or a similar computing device. Taking the electronic device being a server as an example, FIG. 10 is a block diagram of an electronic device for implementing a method for displaying item information according to an embodiment. The electronic device 1000 may vary greatly due to different configurations or performances, and may include one or more central processing units (CPUs) 1010 (the processor 1010 may include but is not limited to, a microprocessor MCU or programmable logic device FPGA, etc.), a memory 1030 for storing data, one or more storage media 1020 (e.g., one or more mass storage devices) storing application programs 1023 or data 1022. The memory 1030 and the storage medium 1020 may be short-term storage or persistent storage. The programs stored in the storage medium 1020 may include one or more modules, and each of the modules may include a series of instructions to operate on the electronic device. Furthermore, the CPU 1010 may be configured to communicate with the storage media 1020 to execute the series of instruction operations in the storage media 1020 on the electronic device 1000. The electronic device 1000 may also include one or more power supplies 1060, one or more wired or wireless network interfaces 1050, one or more input and output (I/O interface) interfaces 1040, and/or one or more operating systems 1021, such as Windows Server^{™}, Mac OS X^{™}, Unix^{™}, Linux^{™}, FreeBSD^{™} and so on.

The I/O interface 1040 may be used to receive or transmit data via a network. The specific example of the above-mentioned network may include a wireless network according to a communication provider of the electronic device 1000. In an example, the I/O interface 1040 includes network interface controller (NIC), which can be connected to other network devices through a base station so as to communicate with the Internet. In an embodiment, the I/O interface 1040 may be a radio frequency (RF) module, which is used to communicate with the Internet in a wireless manner.

Those skilled in the art can understand that the structure shown in FIG. 10 is a schematic diagram, which does not limit the structure of the above electronic device. For example, the electronic device 1000 may also include more or fewer components than those shown in FIG. 10, or have a different configuration than that shown in FIG. 10.

In an embodiment, there is also provided a computer-readable storage medium including instructions, such as a memory including instructions. The instructions can be executed by the processor 1010 of the electronic device 1000 to carry out the method for displaying item information. Alternatively, the computer-readable storage medium may be a ROM, a random access memory (RAM), a CD-ROM, a magnetic tape, a floppy disk, an optical data storage device, and the like.

In an embodiment, there is also provided a computer program product including computer instructions. The computer program/instructions are stored in a computer readable storage medium. A processor of an electronic device reads the computer program/instruction from the computer-readable storage medium, and the processor executes the computer programs/instructions, so that the electronic device executes the method for displaying item information in any of the foregoing embodiments.

Those skilled in the art may understand that all or part of the processes in the methods of the above embodiments can be implemented by instructing relevant hardware through computer programs, and the computer programs can be stored in a non-volatile computer-readable storage medium. When the computer program is executed, the processes of the above-mentioned method embodiments may be implemented. Any reference to the memory, storage, database or other medium used in the various embodiments in this disclosure may include non-volatile and/or volatile memory. The non-volatile memory may include a read only memory (ROM), a programmable ROM (PROM), an electrically programmable ROM (EPROM), an electrically erasable programmable ROM (EEPROM), or a flash memory. The volatile memory may include a random access memory (RAM) or an external cache memory. By way of illustration and not limitation, RAM is available in various forms such as a static RAM (SRAM), a dynamic RAM (DRAM), a synchronous DRAM (SDRAM), a double data rate SDRAM (DDRSDRAM), an enhanced SDRAM (ESDRAM), a synchronous link (Synchlink) DRAM (SLDRAM), a memory bus (Rambus), a direct RAM (RDRAM), a direct memory bus dynamic RAM (DRDRAM), and a memory bus dynamic RAM (RDRAM), etc..

After considering the description and practicing the disclosure disclosed herein, those skilled in the art will easily think of other embodiments of the present disclosure. It should be understood that the disclosure is not limited to the precise structure already described above and shown in the drawings. The scope of the disclosure is limited only by the appended claims.

## Claims

1. A method for displaying item information, performed by an audience terminal, comprising:
displaying (S201) category information corresponding to a combined item object and an interaction operation control on an item display interface of a live broadcast room, wherein the interaction operation control is configured to view basic information of sub-item objects and the combined item object comprises at least two sub-item objects of the same category;
in response to a trigger operation of the interaction operation control, determining a target sub-item object matching specified geographic information of the audience terminal from the at least two sub-item objects; and
displaying (S203) basic information corresponding to the target sub-item object on the item display interface.

2. The method of claim 1, wherein the specified geographic information is current geographic information of the audience terminal, and in response to the trigger operation of the interaction operation control, determining the target sub-item object matching the specified geographic information of the audience terminal from the at least two sub-item objects comprises:
obtaining (S301) applicable geographic information corresponding to each of the at least two sub-item objects;
determining (S302) target applicable geographic information matching the specified geographic information from the applicable geographic information corresponding to each of the sub-item objects; and
determining (S303) a sub-item object corresponding to the target applicable geographic information as the target sub-item object.

3. The method of claim 1, wherein the specified geographic information is geographic information indicated by the trigger operation, and in response to the trigger operation of the interaction operation control, determining the target sub-item object matching the specified geographic information of the audience terminal from the at least two sub-item objects comprises:
obtaining (S401) applicable geographic information corresponding to each of the at least two sub-item objects;
determining (S402) target applicable geographic information matching the specified geographic information from applicable geographic information corresponding to each of the sub-item objects; and
determining (S403) a sub-item object corresponding to the target applicable geographic information as the target sub-item object.

4. The method according to any one of claims 1-3, further comprising:
displaying (S501) basic information corresponding to the target sub-item object on an association interface of the item display interface.

5. The method of claim 4, wherein when there are at least two target sub-item objects, displaying the basic information corresponding to the target sub-item object on the association interface comprises:
determining display sequence information indicated by the trigger operations for the at least two target sub-item objects; and
displaying the basic information corresponding to each of the at least two target sub-item objects on the association interface based on the display sequence information.

6. The method of claim 4, wherein displaying the basic information corresponding to the target sub-item object on the association interface comprises:
displaying a first type of basic information corresponding to the target sub-item object in a first preset area of the association interface, wherein the first type of basic information comprises at least one of an item brand, an item name, an item image and an item video; and
displaying a second type of basic information corresponding to the target sub-item object in a second preset area of the association interface, wherein the second type of basic information comprises at least one of an item price, an item stock keeping unit (SKU), applicable city information, applicable store information and in-store consumption guidance information.

7. The method of any one of claims 1-6, wherein displaying category information corresponding to the combined item object and the interaction operation control on the item display interface of the live broadcast room comprises:
displaying the category information corresponding to the combined item object in a first preset area of the item display interface, wherein the category information comprises at least one of an item category name, an image and a video indicating the item category; and
displaying the interaction operation control in a second preset area of the item display interface.

8. The method of any one of claims 1-7, further comprising:
receiving a live broadcast video of an anchor sent by a server and determining content information for describing the sub-item objects; and
determining the combined item object based on the content information.

9. An apparatus (900) for displaying item information, integrated in an audience terminal, comprising:
an item category information display unit (901), configured to perform displaying category information corresponding to a combined item object and an interaction operation control on an item display interface of a live broadcast room, wherein the interaction operation control is configured to view basic information of sub-item objects and the combined item object comprises at least two sub-item objects of the same category;
a target sub-item object determination unit (902), configured to perform determining a target sub-item object matching specified geographic information of the audience terminal from the at least two sub-item objects in response to a trigger operation of the interaction operation control; and
displaying basic information corresponding to the target sub-item object on the item display interface.

10. The apparatus of claim 9, wherein the specified geographic information is current geographic information of the audience terminal, and the target sub-item object determination unit comprises:
a first applicable geographic information obtaining unit, configured to perform obtaining applicable geographic information corresponding to each of the at least two sub-item objects; and
a first target sub-item object determination sub-unit, configured to perform determining target applicable geographic information matching the specified geographic information from the applicable geographic information corresponding to each of the sub-item objects; and determining a sub-item object corresponding to the target applicable geographic information as the target sub-item object.

11. The apparatus of claim 9, wherein the specified geographic information is geographic information indicated by the trigger operation, and the target sub-item object determination unit comprises:
a second applicable geographic information obtaining unit, configured to perform obtaining applicable geographic information corresponding to each of the at least two sub-item objects; and
a second target sub-item object determination sub-unit, configured to perform determining target applicable geographic information matching the specified geographic information from the applicable geographic information corresponding to each of the sub-item objects; and determining a sub-item object corresponding to the target applicable geographic information as the target sub-item object.

12. The apparatus of any one of claims 9-11, further comprising:
a display unit, configured to perform displaying the basic information corresponding to the target sub-item object on an association interface of the item display interface.

13. The apparatus of claim 12, wherein when there are at least two target sub-item objects, the display unit comprises:
a sequence determination unit, configured to perform determining display sequence information indicated by the trigger operations for the at least two target sub-item objects; and
a sequence display unit, configured to perform displaying the basic information corresponding to each of the at least two target sub-item objects on the association interface based on the display sequence information; or
wherein the display unit comprises:
a first association interface display unit, configured to perform displaying a first type of basic information corresponding to the target sub-item object in a first preset area of the association interface, wherein the first type of basic information comprises at least one of an item brand, an item name, an item image and an item video; and
a second association interface display unit, configured to perform displaying a second type of basic information corresponding to the target sub-item object in a second preset area of the association interface, wherein the second type of basic information comprises at least one of an item price, an item stock keeping unit (SKU), applicable city information, applicable store information and in-store consumption guidance information.

14. The apparatus of any one of claims 9-13, wherein the item category information display unit comprises:
a first item display interface display unit, configured to perform displaying the category information corresponding to the combined item object in a first preset area of the item display interface, wherein the category information comprises at least one of an item category name, an image and a video indicating the item category; and
a second item display interface display unit, configured to perform displaying the interaction operation control in a second preset area of the item display interface.

15. The apparatus of any one of claims 9-14, further comprising:
a detection unit, configured to perform receiving a live broadcast video of an anchor sent by a server and determining content information for describing the sub-item objects; and
a combined item object determination unit, configured to perform determining the combined item object based on the content information.
